# EUROPÄISCHE PATENTSCHRIFT

(11) **EP 2 288 834 B1**
(45) Veröffentlichungstag und Bekanntmachung des Hinweises auf die Patenterteilung: **16.01.2013**
(21) Anmeldenummer: 09745611.5
(22) Anmeldetag: 17.03.2009
(51) Int. Cl.: F16K 31/06

(54) **AZIMUTAL-MAGNETAKTOR**
AZIMUTHAL MAGNETIC ACTUATOR
ACTIONNEUR MAGNÉTIQUE AZIMUTAL

(30) Priorität: 16.05.2008 DE 102008001823
(43) Veröffentlichungstag der Anmeldung: 02.03.2011
(73) Patentinhaber: Robert Bosch GmbH, 70442 Stuttgart (DE)
(72) Erfinder: FRITZSCHE, Thomas, 71229 Leonberg (DE); RAIN, Oliver, 71229 Leonberg (DE)
(86) Internationale Anmeldenummer: PCT/EP2009/053118
(87) Internationale Veröffentlichungsnummer: WO 2009/138278

(56) Entgegenhaltungen:
- DE-A1- 2 335 460
- DE-A1- 19 918 007
- FR-A- 1 531 234

## Beschreibung

### Stand der Technik

Aktoren für rotatorische Bewegungen, die im weitesten Sinne auf der Wechselwirkung von Magnetfeldern und Materie basieren, sind seit längerem etabliert und zum Beispiel aus DE 100 29 408 B4, EP 0 780 852 B1 sowie aus EP 0 713 004 B1 und aus US 5,842,680 A bekannt. Bei den Lösungen gemäß DE 100 29 408 B4 und EP 0 780 852 B1 erfolgt die kontinuierliche azimutale Stellung eines Rotors unter Verwendung von in der Regel geringen Quer-Reluktanzkräften.

EP 0 713 004 B1 offenbart eine Aktorkomponente durch Rückgriff auf Stellmotoren.

Bei der Lösung gemäß US 5,842,680 A wird eine Kombination von Magnetkräften unterschiedlicher Richtungen offenbart, um auftretenden Reibungskräften gleichzeitig zu begegnen.

DE-A-199 18007 zeigt die Merkmale des Oberbegriffs des Anspruchs 1.

### Offenbarung der Erfindung

Erfindungsgemäß wird eine Magnetkreiskonfiguration vorgeschlagen, bei dem in Längsrichtung wirkende Magnetkräfte zur azimutalen Lageveränderung eines Dreh-Ankers oder Drehaktors einer Ankerbaugruppe verwendet werden. Der Dreh-Anker der Ankerbaugruppe lässt sich dabei zwischen mindestens zwei diskreten Azimut-Winkelpositionen hin- und herschalten. In Verbindung mit vielfältigen Varianten dieses Grundprinzips der erfindungsgemäß vorgeschlagenen Lösung, lassen sich durch diese eine Reihe von Vorteilen erzielen:

Es ist ein hohes Drehmoment bei relativ geringer radialer Abmessung erzielbar sowie die Möglichkeit gegeben, ein aktives, d.h. Magnetfeld-getriebenes Hin- und Herschalten bei Verwendung mehrerer Dreh-Anker-Module zu erreichen. Des Weiteren bietet die erfindungsgemäß vorgeschlagene Lösung die Möglichkeit einer Beeinflussung der Kombination Kraft/Wegstrecke durch Rückgriff auf Anordnungen mit mechanischen Übersetzungen.

Durch die erfindungsgemäß vorgeschlagene Lösung lassen relativ geringe zurückgelegte Wege der bewegten Bauteile erzielen. Dadurch erfolgt eine Verminderung der hydraulischen Reibungseffekte bei Betrieb des erfindungsgemäß vorgeschlagenen Dreh-Ankers in einem Medium, so zum Beispiel einer Flüssigkeit wie zum Beispiel insbesondere Kraftstoff bei Einsatz der erfindungsgemäß vorgeschlagenen Lösung in einem Kraftstoffinjektor.

Des Weiteren zeichnet sich die erfindungsgemäß vorgeschlagene Lösung durch einen extrem einfachen Aufbau aus, wobei auf eine Verwendung von prinzipiell bereits vorhandenen erpropten Baugruppen hinsichtlich Magnetkernen, Spulenträger etc. zurückgegriffen werden kann.

Der der Erfindung vorliegende Kerngedanke ist darin zu sehen, dass der Aktor als Dreh-Anker (Drehaktor) ausgebildet ist und ein oder mehrere Module umfasst. Ein jedes der Module umfasst einen Magnetkern mit einer Stromspule. Ein jedes Dreh-Anker-Modul ist um eine Drehachse mit dem eigentlich zu bewegenden Bauteil, so zum Beispiel einem Öff nungsmcchanismus in Gestalt eines Ventilglieds - im Falle eines Kraftstoffinjektors - verbunden. Die räumliche Verteilung der durch die erfindungsgemäß vorgeschlagene Lösung erzeugten Magnetkräfte kann durch eine Materialverteilung im Magnetkern sowie durch die geometrische Formgebung der stromführenden Spulenregionen beeinflusst werden. Die Funktion des erfindungsgemäß vorgeschlagenen Dreh-Ankers umfasst die Erzeugung einer rotatorischen Bewegung, die über eine Drehachse auf ein zu bewegendes Bauteil übertragen wird. Dadurch kann zum Beispiel in einem Ventil eines Kraftstoffinjektors ein Hydraulikfluss, d.h. das Fließen eines Mediums, wie zum Beispiel Kraftstoff, aktiviert bzw. unterbrochen werden. Der erfindungsgemäß vorgeschlagene Dreh-Anker kann zwei fixe Schaltpositionen, so zum Beispiel die Ein- als auch die Ausposition einnehmen und aus einer in die andere Position durch die Wirkung einer Längs-Magnetkraft auf einen Ankerflügel oder eine Rückstellfeder überführt werden. Die Rückstellung kann ebenso gut mit Hilfe einem zusätzlich vorgesehenen Magnetkreises mit entsprechend verbesserter Drehmomententwicklung bzw. Dynamik erfolgen.

Zur Limitierung eines azimutalen Bewegungsbereiches des Dreh-Anker-Moduls sind unterschiedliche Anschlagkonzepte möglich. Beispielsweise seien genannt eine justierbare mechanische Anschlagskomponente unter Verwendung von Stellschrauben oder ein direkter Anschlag am Magnetkern.

Die Dauer der Ein- und Ausschaltvorgänge liegt im Bereich weniger Mikrosekunden und kann durch zusätzliche Module, Geometrie-, Spulen- und Ansteuerungs- und Werkstoffoptimierungen weiter reduziert werden. Eine Erhöhung der maximalen Stromstärke in den Spulen der Dreh-Anker-Module und/oder eine Spannungsboostcrung, die in konventionellen Magnetaktoren oft zur Dynamiksteuerung eingesetzt wird, bieten weitere Möglichkeiten, das entwickelte Drehmoment bzw. die Dynamik des erfindungsgemäß vorgeschlagenen, mindestens einen Dreh-Anker-Modul umfassenden Dreh-Ankers zu steigern.

Es sind eine Vielzahl von Varianten des obenstehend dargestellten Grundkonzeptes denkbar. Diese Varianten können zum Beispiel durch eine Kombination von Ausgestaltungen des obenstehend beschriebenen Grundkonzeptes dargestellt werden.

### Kurze Beschreibung der Zeichnung

Es zeigen:
- Figuren 1.1, 1.2 und 1.3: eine erste Ausführungsform des erfindungsgemäß vorgeschlagenen Drehaktors in Draufsicht, Frontansicht und im Halbschnitt dargestellter 3D-Darstellung,
- Figur 2.1: die sich bei Bestromung der Spule einstellende magnetische Induktion in Ankerflügel und Magnetkern,
- Figur 2.2: der sich einstellende magnetische Fluss im Magnetkern und im Ankerflügel,
- Figuren 3.1, 3.2 und 3.3: eine weitere Ausfiihrungsform des erfindungsgemäß vorgeschlagenen Drehaktors in Draufsicht, Frontansicht sowie im Halbschnitt dargestellter 3D-Darstellung,
- Figuren 4.1, 4.2 und 4.3: eine dritte Ausführungsform des erfindungsgemäß vorgeschlagenen Drehaktors mit mechanischer Übersetzung und exzentrisch angeordneter weiterer Drehachse,
- Figur 5: eine vierte Ausführungsform des erfindungsgemäß vorgeschlagenen Drehaktors mit Übertragungselementen zur Verstärkung der Torsionskraft,
- Figur 6: eine fünfte Ausführungsvariante des erfindungsgemäß vorgeschlagenen Drehaktors mit einer Drehübersetzung zur Steigerung des erzielbaren Drehweges,
- Figuren 7.1, 7.2 und 7.3: eine sechste Ausführungsform des erfindungsgemäß vorgeschlagenen Drehaktors mit einer im Magnetkern untergebrachten Halbspule,
- Figur 8: eine sechste Ausführungsform des erfindungsgemäß vorgeschlagenen Drehaktors, wobei die Ankerflügel vollständig als Permanentmagnete ausgeführt sind,
- Figur 9: eine siebte Ausführungsform des erfindungsgemäß vorgeschlagenen Drehaktors mit Modulen, deren Ankerflügel partiell als Permenentmagnete ausgeführt sind,
- Figur 10: eine achte Ausführungsform des erfindungsgemäß vorgeschlagenen Drehaktors mit Ausschaltmodulen zur Rückstellung der Ankerflügel,
- Figur 11: eine perspektivische Darstellung der in Figur 10 in der Draufsicht dargestellten Ausfiihrungsform mit im Halbschnitt dargestellten Ein- und Ausschaltmodulen, die paarweise einander gegenüberliegend angeordnet sind,
- Figur 12: eine Draufsicht auf eine um eine Kippachse verkippte Anordnung von Einschaltmodulen, jeweils einen Ankerflügel, einen Magnetkern und eine von diesem umgebende Spule umfassend und
- Figur 13: eine perspektivische Darstellung des Kippwinkels, um den gemäß der Darstellung in Figur 12 die Einschaltmodule, Ankerflügel, Magnetspule und Magnetkern umfassend, in Bezug auf die sich in vertikal erstreckende Richtung erstreckende Drehachse verkippt sind.

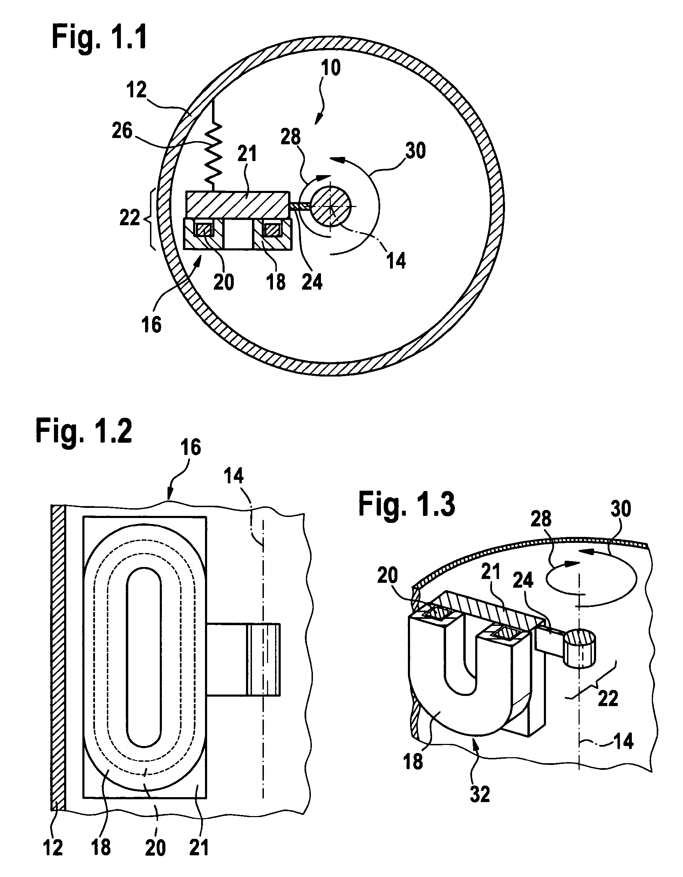

In den nachfolgend beschriebenen Figuren 1.1 bis 13 erfolgt die Darstellung der Draufsicht immer auf einen Halbschnitt. Nachstehend werden die Ankerflügel 21 als in Rechteckform ausgebildet beschrieben, es ist jedoch auch eine andere allgemeinere dreidimensionale Geometrie derselben möglich, ferner das Vorhandensein von Bohrungen, Schlitzen und dergleichen. Die trifft ebenfalls auf die Konfiguration des Magnetkernes 18 zu. Umfasst eine der in den Figuren 1.1 bis 13 dargestellten Ausführungsformen eine Anzahl von Magnetspulen 20 bis 38, können diese separat parallel oder in Reihe geschaltet angesteuert werden. Bei Varianten mit mehr als zwei Magnetspulen sind entsprechend auch Mischformen der Ansteuerungen möglich.

### Ausführungsformen

Den Figuren 1.1, 1.2 und 1.3 ist eine erste Ausfiihrungsform des erfindungsgemäß vorgeschlagenen Drehaktors in Draufsicht, Frontansicht und in 3D-Darstellung wiedergegebenem Halbschnitt zu entnehmen.

Die Draufsicht gemäß Figur 1.1 zeigt einen Drehaktor 10, der ein zylindrisch ausgebildetes Gehäuse 12 aufweist. Das Gehäuse 12 ist symmetrisch zu einer sich in die Zeichenebene erstreckenden Drehachse 14 ausgeführt. Bei dem Gehäuse 12 kann es sich zum Beispiel um das Gehäuse, d.h. einen Injektorkörper eines Kraftstoffinjektors zum Einspritzen von Kraftstoff für Verbrennungskraftmaschinen, seien es selbstzündende Verbrennungskraftmaschinen, seien es fremdgezündete Verbrennungskraftmaschinen, handeln.

Mit Bezugszeichen 16 ist ein Drehaktor-Modul bezeichnet, welches insbesondere als Dreh-anker ausgebildet ist. Das Drehaktor-Modul 16 umfasst einen mit dem Gehäuse fest verbundenen Magnetkern 18, in den eine bestrombare Magnetspule 20 eingebettet ist. Dieser liegt benachbart ein an einem Hebelarm 24 gelagerter Ankerflügel 21 gegenüber, wobei dessen Hebelarm 24 um die Drehachse 14 des Drehaktors 10 verschwenkbar ausgebildet ist. Das in Figur 1.1 in der Draufsicht dargestellte Drehaktor-Modul 16 wird zwischen zwei in der Azimutalebene liegenden diskreten Winkelpositionen hin- und hergeschaltet. Bei der Bestromung der Magnetspule 20, die in den Magnetkern 18 eingebettet ist, wird der Ankerflügel 21 entgegen des Uhrzeigersinns in einer zweiten Drehrichtung, vgl. Pfeil 30 in Figur 1.1 angezogen und in eine erste azimutale Winkelposition verstellt. Wird die Bestromung der in den Magnetkern 18 eingebetteten Magnetspule 20 aufgehoben, so wird der Ankerflügel 21 mittels einer an der Innenseite des Gehäuses 12 zum Beispiel befestigten Rückstellfeder 26 in seine Ausgangslage zurückgestellt. Dies erfolgt entsprechend der ersten Drehrichtung 28, wie in Figur 1.1 durch den mit Bezugszeichen 28 bezeichneten Pfeil angedeutet. Beide Verschwenkbewegungen, sowohl in die erste Drehrichtung 28 als auch in die zweite Drehrichtung 30 erfolgen um die Drehachse 14, die sich in die Zeichenebene gemäß Figur 1.1 erstreckt.

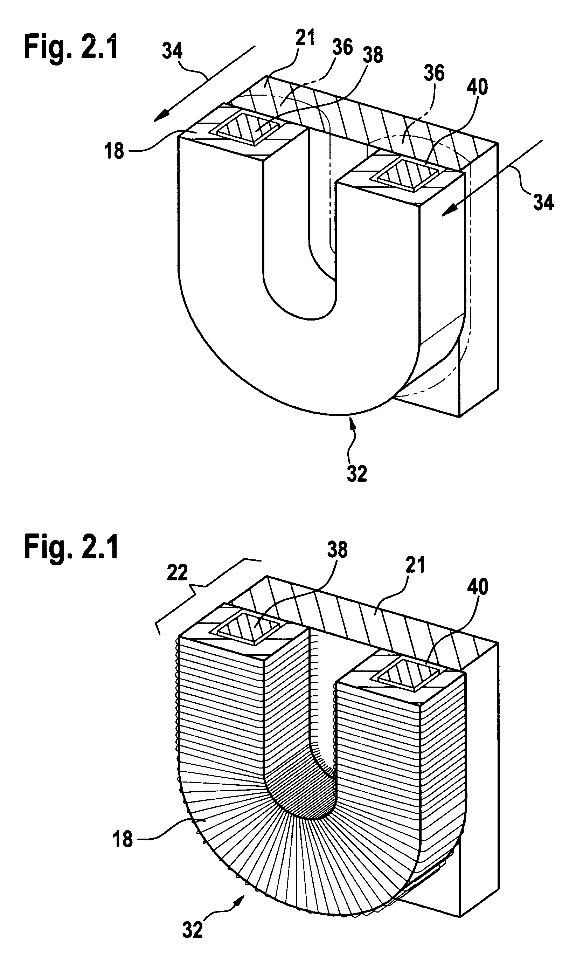

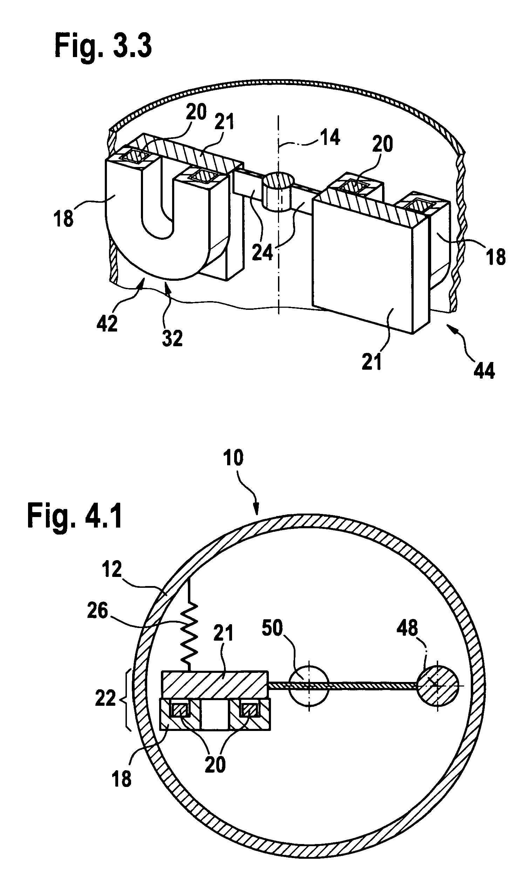

In Bezug auf die in Figur 1.1 in der Draufsicht dargestellte erste Ausführungsform wird angemerkt, dass über die Drehachse 14 ein in der Figurensequenz gemäß der Figuren 1.1, 1.2 und 1.3 nicht dargestellter Öffnungs-/Schließmechanismus 50 betätigbar ist, bei dem es sich zum Beispiel um den Öffnungs- oder Schließmechanismus eines Kraftstoffinjektors handeln kann (vgl. Figuren 4.1, 4.2, 5 und 6). Die im Drehaktor-Modul 16 bzw. im Einschaltmodul 22 erzeugte Magnetkraft verläuft im Wesentlichen in der Zeichenebene gemäß Figur 1.1 als eine in Längsrichtung gerichtete Magnetkraft *F̅*, bezeichnet mit Bezugszeichen 34, vgl. Darstellung gemäß Figur 2.1.

Figur 1.2 zeigt eine Frontansicht des in Figur 1.1 in der Draufsicht dargestellten Drehaktor-Moduls.

Aus der Darstellung gemäß Figur 1.2 geht hervor, dass der Ankerflügel 21 mittels des Hebelarmes 24 an der Drehachse 14 gelagert ist und um diese in beide Drehrichtungen 28, 30 - wie in Figur 1.1 dargestellt - verschwenkbar ist. Das Drehaktor-Modul 16 umfasst die im Wesentlichen in Rechteckform ausgebildeten Ankerflügel 21, vor dem - wie aus Figur 1.1 hervorgeht - der Magnetkern 18 mit in diesen eingebetteter Magnetspule 20 aufgenommen ist. Bezugszeichen 20 bezeichnet die Magnetspule, die sich geschlossen durch den an seinem unteren Ende in U-Form 32 ausgebildeten Magnetkern 18 erstreckt. Über die Materialverteilung und Materialzusammensetzung des Magnetkernes 18 sowie die geometrische Anordnung der stromführenden Magnetspule 20 lässt sich die räumliche Verteilung der entwickelten, vornehmlich in Längs-Richtung wirkenden Magnetkräfte *̅F̅*̅, vgl. Bezugszeichen 34, Darstellung in den Figuren 1 und 2, beeinflussen.

Figur 1.3 zeigt eine im Halbschnitt wiedergegebene perspektivische 3D-Darstellung des Drehaktor-Moduls gemäß der Figuren 1.1 und 1.2.

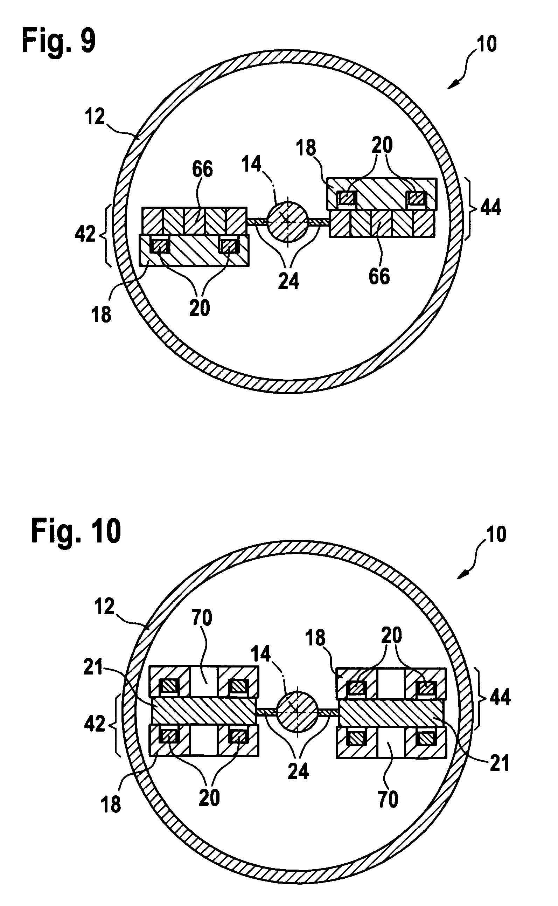

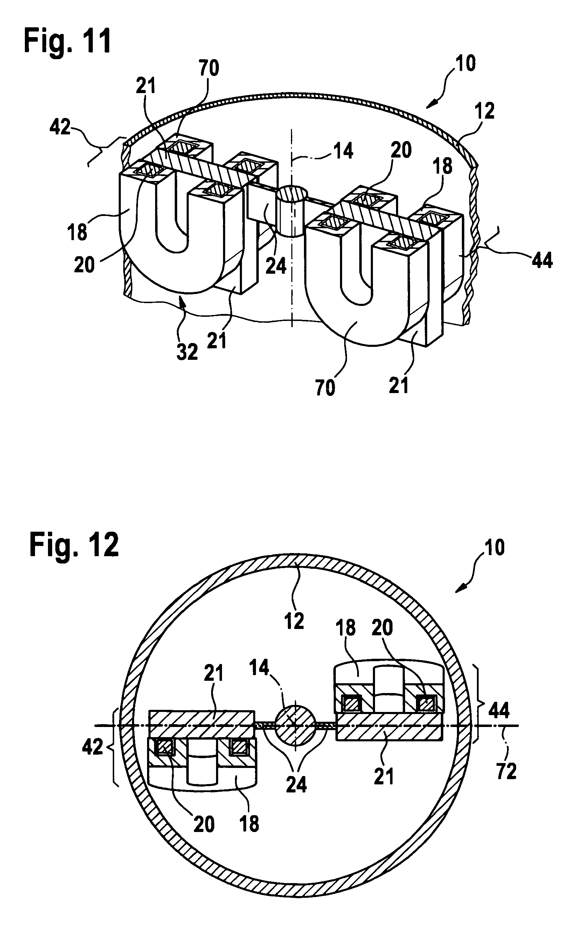

Figur 1.3 zeigt, dass in dieser Ausführungsform das Drehaktor-Modul an einem Hebelarm 24 zur Betätigung eines Öffnungs-/Schließmechanismus 50 an der Drehachse 14 aufgenommen ist. Bei Bestromung der in den Magnetkern 18 eingebetteten Magnetspule 20 wird der Ankerflügel 21 in die zweite Drehrichtung 30 entgegen des Uhrzeigersinns angezogen und bei Aushebung der Bestromung der Magnetspule 20 im Magnetkern 18 zum Beispiel über die in Figur 1.1 dargestellte Rückstellfeder 26 oder ein Rückstellmodul, vgl. Darstellung gemäß der Figuren 10 und 11, in seine ursprüngliche Stellung zurückgestellt.

Die Funktion des Drehaktor-Moduls 16 gemäß der in Figur 1.1, 1.2 und 1.3 dargestellten Grundform der erfindungsgemäß vorgeschlagenen Lösung, liegt in der Erzeugung einer rotatorischen Bewegung, die über die Drehachse 14 oder über ein Hebelarmsystem (52, 54, 56, 58, 60, 62) auf einen Öffnungs-/Schließmechanismus 50 (vgl. Darstellungen gemäß der Figuren 4.1, 4.2, 5 und 6) übertragen wird. Damit kann zum Beispiel in einem Kraftstoffinjektor der Kraftstofffluss aktiviert bzw. unterbrochen werden. Das erfindungsgemäß vorgeschlagene Drehaktor-Modul 16, ausgebildet zum Beispiel als ein Einschaltmodul 22, vermag zwei fixe azimutale Winkelpositionen (ein/aus) einzunehmen und wird aus einer in die jeweils andere Schaltstellung durch die Wirkung der Längs-Magnetkraft *̅F̅*̅, vgl. Position 34, auf den Ankerflügel 31 bzw. die Rückstellfeder 26 überführt. Wie bereits obenstehend erwähnt, kann die Rückstellbewegung des Ankerflügels 21 auch mit Hilfe eines zusätzlichen Magnetkreises mit entsprechend verbesserter Drehmomententwicklung bzw. Dynamik erfolgen, wie dies in den Figuren 10 und 1 in schematischer Weise dargestellt ist.

Zur Begrenzung des azimutalen Bewegungsbereiches des Drehaktor-Moduls 16, welches im Wesentlichen den Ankerflügel 21, den Magnetkern 18 und die in diesen eingebettete bestrombare Magnetspule 20 umfasst, können unterschiedliche Anschlagskonzepte eingesetzt werden. Beispielsweise seien justierbare mechanische Anschläge genannt, die durch Stellschrauben gegeben sein können. Neben Stellschrauben können auch fixe Anschläge innerhalb des Gehäuses 12 des erfindungsgemäß vorgeschlagenen Drehaktors 10 vorgesehen sein.

Der Darstellung gemäß Figur 2.1 ist die im Ankerflügel und Magnetkern eines Einschaltmoduls induzierte magnetische Induktion zu entnehmen.

Wie aus der perspektivischen Ansicht gemäß Figur 2.1 hervorgeht, ist die im Magnetkern 18 eingebettete Magnetspule 20 im bestromtem Zustand 38 wiedergegeben. Gemäß der Darstellung in Figur 2.1 ist der Magnetkern 18 an einer Seite (magnetisch) offen und zwar der Seite, die der Seitenfläche des im Wesentlichen rechteckförmig ausgebildeten Ankerflügels 21 gegenüberliegt. Im Ankerflügel 21 wird durch die bestromte Magnetspule 38 die magnetische Induktion 36 erzeugt, welche die Bewegung des Ankerflügels 21 gemäß der Figuren 1.1 und 1.3 in die zweite Drehrichtung 30 auf die bestromte Magnetspule 38 zu, ermöglicht und dadurch eine Bewegung auslöst. Aus der perspektivischen Darstellung gemäß Figur 2.1 geht hervor, dass bei bestromter Magnetspule 38 die im Wesentlichen in der Ebene gemäß Figur 1.1 verlaufenden Längs-Magnetkräfte *F̅* 34 erzeugt werden. In der Darstellung gemäß Figur 2.1 ist der Magnetkern 18, in den die bestromte Spule 38 eingebettet ist, an einer Seite offen, vgl. Bezugszeichen 40.

Entsprechende Dimensionierung vorausgesetzt, liegt die Dauer der Ein- und Ausschaltvorgänge des Drehaktormoduls 10 im Bereich weniger 100 µs und kann durch zusätzliche Einschaltmodule 22, die jeweils einen erfindungsgemäß vorgeschlagenes Drehaktor-Modul 16 umfassen, durch Geometrie-, Spulen-, Ansteuerungs- und Werkstoffoptimierung weiter reduziert werden. Eine Erhöhung der maximalen Stromstärke in der oder den Magnetspulen 20, 38 der Module 22 und/oder eine Spannungsboosterung, die in konventionellen Magnetaktoren oft zur Dynamiksteigerung eingesetzt werden, bieten weitere Möglichkeiten, das entwickelte Drehmoment bzw. die Dynamik hinsichtlich der Rückstellbewegung des erfindungsgemäß vorgeschlagenen Drehaktor-Moduls 16 zu steigern.

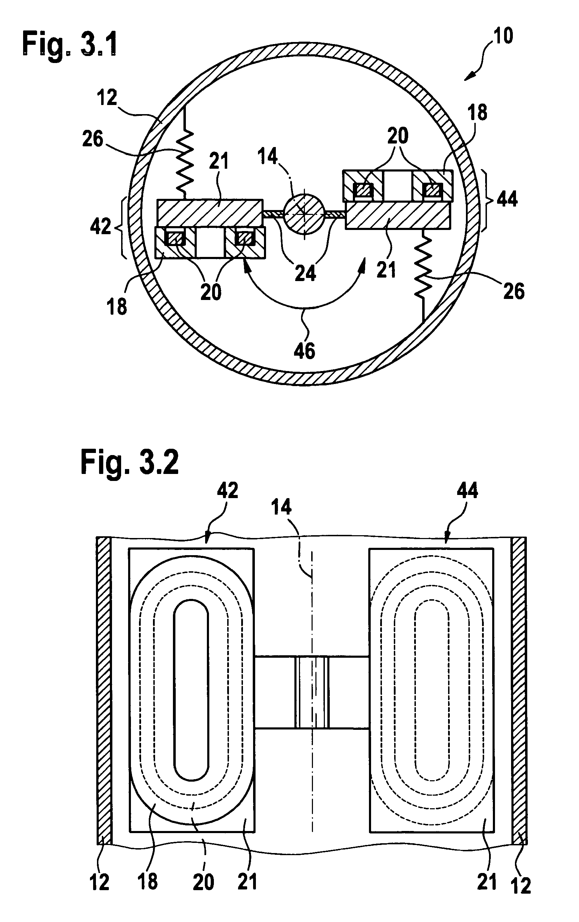

In der Figurensequenz der Figuren 3.1, 3.2 und 3.3 ist eine zweite Ausführungsform des erfindungsgemäß vorgeschlagenen Drehaktors dargestellt.

Der Draufsicht gemäß Figur 3.1 ist zu entnehmen, dass um die Drehachse 14 zwei in einem 180°-Versatz 46 angeordnete Einschaltmodule, ein erstes Einschaltmodul 42 sowie ein zweites Einschaltmodul 44, angeordnet sind. Jedes der beiden Einschaltmodule 42, 44 umfasst den Ankerflügel 21, dem diesen gegenüberliegenden Magnetkern 18, in dem die bestrombare Magnetspule 20 eingebettet ist. Die beiden Ankerflügel 21 sind einander gegenüberliegend an Hebelarmen 24 angeordnet, die um den erwähnten 180°-Versatz 46 einander gegenüberliegend angeordnet sind. Das maximal entwickelbare Drehmoment steigt gegenüber dem in der Figurensequenz der Figuren 1.1, 1.2 und 1.3 dargestellten Drehaktor-Modul mit der Anzahl der eingesetzten Module 42, 44 - wie in Figur 3.1 dargestellt - an.

Wie der Darstellung gemäß der Figur 3.1 des Weiteren entnommen werden kann, ist ein jeder der dort dargestellten Ankerflügel 21 der Einschaltmodule 42, 44 mit einer Rückstellfeder 26 beaufschlagt, die ihrerseits an der Innenseite des Gehäuses 12 des Drehaktors 10 befestigt ist. Die Rückstellfeder 26 übernimmt die Rückstellbewegung der Ankerflügel 21 in die erste Drehrichtung 28, wie in Figur 1 und 1.3 durch den mit Bezugszeichen 28 versehenen Pfeil schematisch angedeutet. Anstelle der in Figur 3.1 den Ankerflügeln 21 jeweils zugeordneten Rückstellfeder 26 können auch - wie in Figuren 10 und 11 dargestellt - Rückstellmodule 70 eingesetzt werden.

Figur 3.2 zeigt eine Frontansicht der in Figur 3.1 in der Draufsicht dargestellten zweiten Ausführungsform des erfindungsgemäß vorgeschlagenen Drehaktormoduls.

Wie Figur 3.2 zeigt, sind die beiden Module 42, 44 über die Hebelarme 24 symmetrisch zur Drehachse 14 aufgenommen und vom Gehäuse 12 umschlossen. Ein jedes der Module 42, 44 umfasst den im Wesentlichen rechteckförmig ausgebildeten Ankerflügel 21, den diesem zugeordneten Magnetkern 18, in den die Magnetspule 20 eingelassen ist.

Figur 3.3 zeigt einen Halbschnitt einer dreidimensionalen Darstellung der in den Figuren 3.1und 3.2 dargestellten zweiten Ausführungsform des erfindungsgemäß vorgeschlagenen Drehaktormoduls.

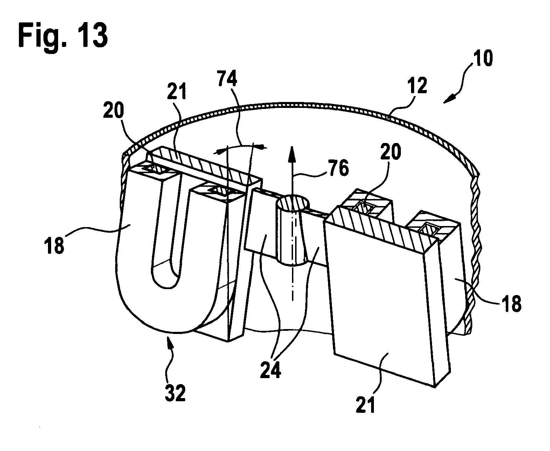

Wie Figur 3.3 zu entnehmen ist, umfassen das erste Einschaltmodul 42 bzw. das zweite Einschaltmodul 44 neben den lediglich zur Hälfte dargestellten Ankerflügeln 21 die in U-Form 32 ausgebildeten Magnetkerne 18, in die die bestrombaren Magnetspulen 20 eingelassen sind. Aus Figur 3.3 geht des Weiteren hervor, dass die Komponenten der Module 42, 44 jeweils parallel zum Verlauf der Drehachse 14 an den Hebelarmen 24 angeordnet sind, im Gegensatz zur in den Figuren 12 und 13 dargestellten Ausführungsform, bei der die Komponenten der Einschaltmodule 42, 44 in Bezug auf eine Kippachse 72 in einem Kippwinkel 74 angeordnet sind.

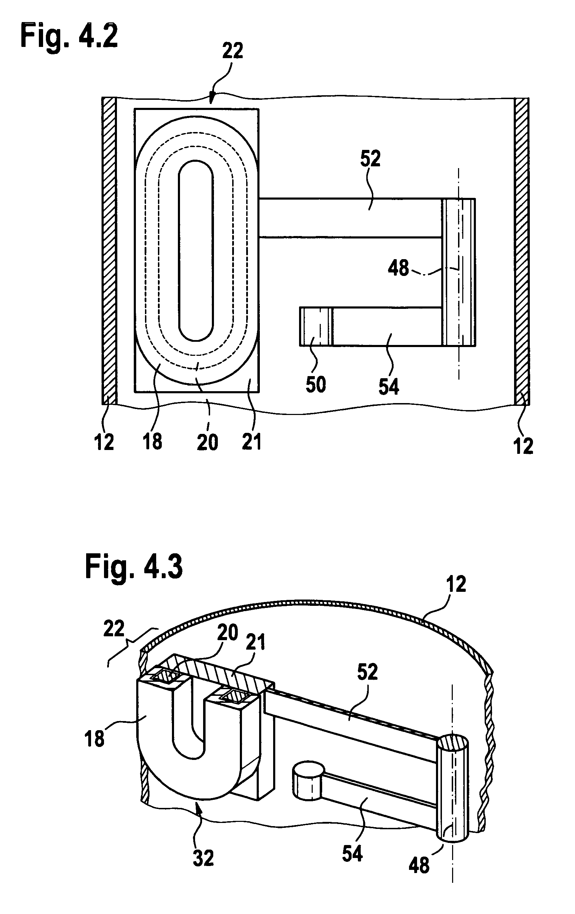

Den Figuren 4.1, 4.2 und 4.3 ist eine dritte Ausführungsform des erfindungsgemäß vorgeschlagenen Drehaktormoduls mit einer Ausführungsvariante einer mechanischen Übersetzung zu entnehmen.

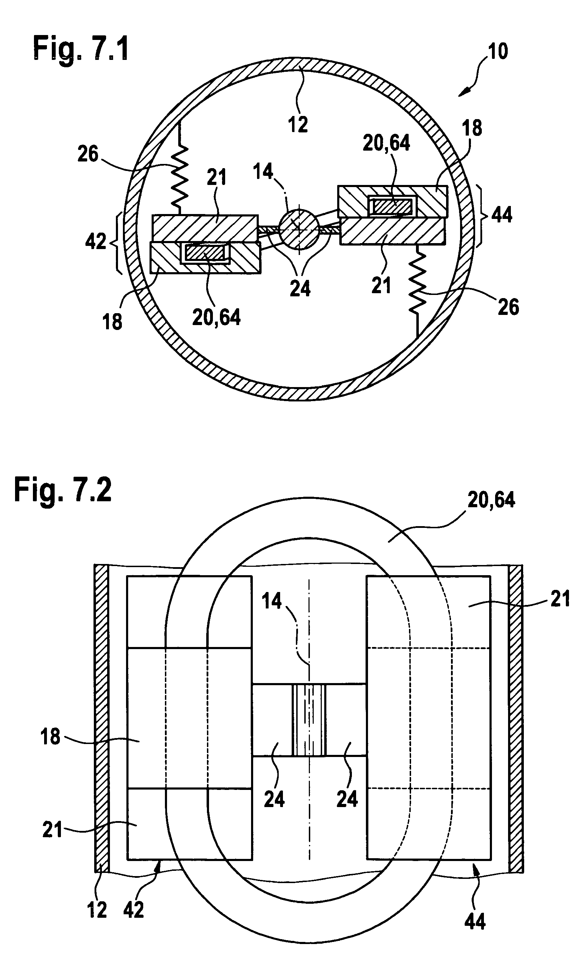

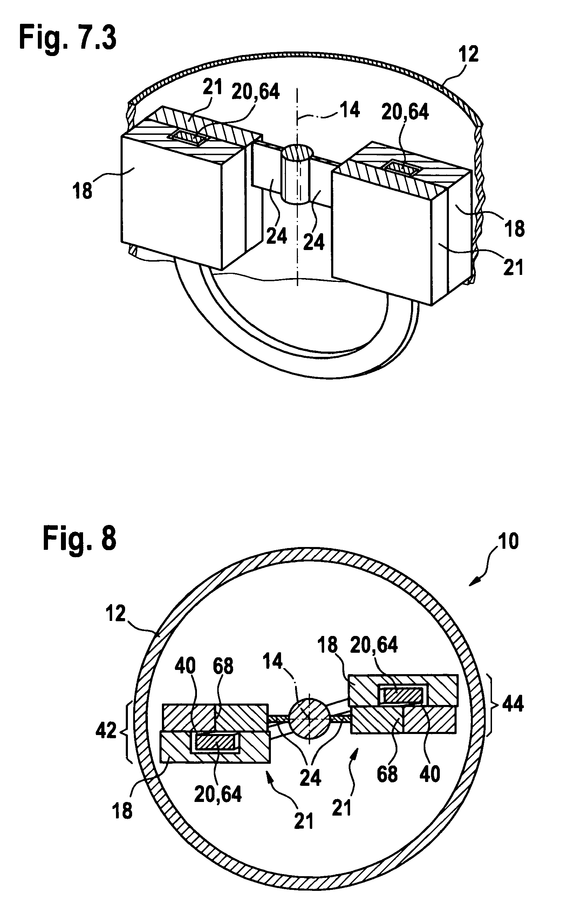

Wie die Draufsicht gemäß Figur 4.1 auf die dritte Ausführungsform des erfindungsgemäß vorgeschlagenen Drehaktormoduls 16 zeigt, ist der Ankerflügel 21 des Einschaltmoduls 22 über einen ersten Hebelarm 52 mit einer exzentrisch in Bezug zur Achse des Gehäuses 12 des Drehaktors 10 angeordneten Drehachse 14 verbunden. Von dieser wiederum, vgl. Darstellung gemäß Figur 4.2, erstreckt sich ein weiterer, zweiter Hebelarm 54 über den der in Figur 4.2 identifizierte Öffnungs-/Schließmechanismus - zum Beispiel eines Kraftstoffmjektors - zum Beispiel, betätigbar ist. Aus der Darstellung gemäß Figur 4.2 geht hervor, dass der Ankerflügel 21 analog zu den vorhergehenden Ausführungsformen des erfmdungsgemäß vorgeschlagenen Drehaktormoduls, eine im Wesentlichen rechteckförmige Gestalt hat und mit dem diesem vorgelagerten Magnetkern 18, in den wiederum die bestrombare Spule 20 eingelassen ist, zusammenwirkt. Durch die aus Figur 4.2 hervorgehende unterschiedliche Länge der Hebelarme 52 bzw. 54 kann das Maximale von einem Einschaltmodul 22 erzeugte Drehmoment gesteigert werden. Dies ist insbesondere bei Anwendungen in Kraftstoffinjektoren, in denen hohe Drücke geschaltet werden müssen, von Interesse. Figur 4.3 zeigt einen Halbschnitt in 3D-Darstellung der in den Figuren 4.1 und 4.2 dargestellten dritten Ausführungsform des erfindungsgemäß vorgeschlagenen Drehaktormoduls. Aus dieser Darstellung geht hervor, dass der Magnetkern 18, in die bestrombare Spule 20 eingelassen ist, an seiner Unterseite eine U-Form aufweist und der Strom in der Magnetspule 20 in zwei Richtungen fließt, im Gegensatz zur Ausführungsform der Magnetspule gemäß der Figuren 7.1, 7.2, 7.3 und Figur 8.

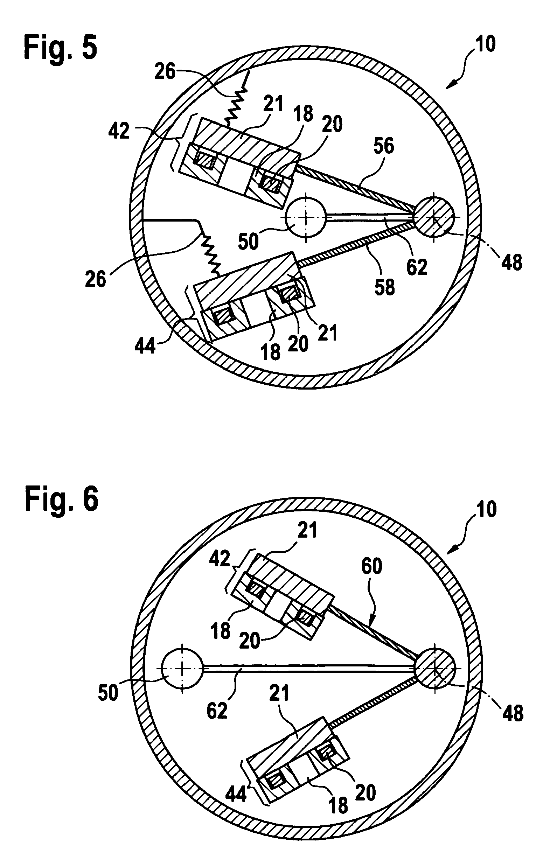

Den Figuren 5 und 6 sind weitere Ausführungsvarianten einer mechanischen Übersetzung zu entnehmen. Figur 5 zeigt, dass die Ankerflügel 21 des ersten Einschaltmoduls 42 bzw. des zweiten Einschaltmoduls 44 über einen ersten Übersetzungsarm 56 sowie einen zweiten Übersetzungsarm 80 auf die exzentrisch gelagerte Drehachse 48 wirken und diese wiederum über ein Übertragungselement 62, was in seiner einfachsten Form auch als Hebel ausgebildet sein kann, mit dem Öffnungs-/Schließmechanismus 50, so zum Beispiel zur Betätigung eines Kraftstoffeinspritzventils, verbunden ist. Wie aus der Darstellung gemäß Figur 5 hervorgeht, umfasst ein jedes der Einschaltmodule 42, 44 jeweils einen Ankerflügel 21, der in der in Figur 5 dargestellten Ausfühivngsfoini zum Beispiel mittels der Rückstellfeder 26 mit der Innenseite des Gehäuses 12 des Drehaktors 10 verbunden ist. Des Weiteren umfasst ein jedes der Module 42, 44 den Magnetkern 18, in den die bestrombare Magnetspule 20 eingelassen ist. Über die in Figur 5 dargestellte mechanische Übersetzung lassen sich die an den Öffnungs-/Schließmechanismus 50 zu übertragenden Torsionskräfte steigern.

Figur 6 zeigt eine Ausführungsform einer mechanischen Verstärkung, die eine Drehwegübersetzung 60 umfasst. Bei dieser Ausführungsform des Drehaktors 10 sind die beiden Module 42, 44 weiter von der Innenseite des Gehäuses 12 beabstandet, im Inneren desselben gelagert und über Hebelarme gleicher Länge mit der exzentrisch verlaufenden Drehachse 48 gekoppelt. An der exzentrisch gelagerten Drehachse 48 wiederum befindet sich ein Übertragungselement 62, welches ebenfalls hebelförmig ausgebildet ist und auf einen exzentrisch zur Achse des Gehäuses 12 des Drehaktors 10 angeordneten Öffnungs-/Schließmechanismus 50 wirkt. Über die in Figur 6 dargestellte Ausführungsform mit einer Drehwegübersetzung 60 kann der Weg, um den sich der Öffnungs-/Schließmechanismus 50 beispielsweise zur Freigabe oder zur Unterbrechung eines Kraftstoffflusses, bewegt, vergrößert werden, wohingegen mit der in Figur 5 dargestellten mechanischen Umsetzung die übertragenen Torsionskräfte verstärkt werden können.

Die beiden in den Figuren 5 und 6 dargestellten mechanischen Übersetzungen dienen einerseits in Bezug auf die Ausführungsform gemäß Figur 5 zur Erhöhung der Torsionskraft bei reduziertem Drehweg und in Bezug auf die Ausführungsform gemäß Figur 6 einer Erhöhung des Drehweges bei reduzierter Torsionskraftübertragung.

Die beiden Ausführungsvarianten sind, vgl. Figur 5, die Übersetzungsarme 56, 58 mit dem Ankerflügel 21 verbunden und in der Darstellung gemäß Figur 6 stehen die Ankerflügel 21 des ersten und des zweiten Moduls 42, 44 über Übersetzungsarme identischer Länge mit der exzentrisch gelagerten Drehachse 48 in Verbindung.

In den Darstellungen gemäß der Figuren 7.1, 7.2 und 7.3 ist eine weitere Ausführungsform des erfindungsgemäß vorgeschlagenen Drehaktor-Moduls in Draufsicht, in Frontsicht und in Halbschnitt in 3D-Darstellung wiedergegeben.

Der Draufsicht gemäß Figur 7.1 ist zu entnehmen, dass gemäß dieser Darstellung die Module 42, 44 jeweils Halbspulen 20, 64 umfassen, die mit den an den beiden einander gegenüberliegenden Hebelarmen 24 angeordneten Ankerflügeln 21 zusammenwirken. Mit Bezugszeichen 64 ist die Stromflussrichtung bezeichnet, in der die Halbspulen 20 der Module 42, durchflossen werden. Die Stromflussrichtung 64 verläuft im Unterschied zu den vorstehend dargestellten Ausführungsformen des erfindungsgemäß vorgeschlagenen Drehaktor-Moduls 16 lediglich in eine Richtung. Prinzipbedingt, vgl. Darstellung gemäß Figur 7.2, ist einem jeden der Ankerflügel 21 lediglich eine halbe Magnetspule 20 zugeordnet. Wie Figur 7.2 zeigt, sind auch gemäß dieser Ausführungsvariante die einzelnen im Wesentlichen rechteckförmig ausgebildeten Ankerflügel 21 über gegenüberliegende Hebelarme 24 mit der Drehachse 14 verbunden. Auch die gemäß dieser Ausführungsvariante eingesetzten Halbspulen erzeugen die in Zusammenhang mit Figur 2.1 dargestellten in Längs-Richtung gerichteten Magnetkräfte F, vgl. Bezugszeichen 34, die in der Zeichenebene gemäß der Figur 7.1 verlaufen.

Der Darstellung gemäß Figur 7.3 ist eine Schnittdarstellung der in den Figuren 7.1 und 7.2 dargestellten Ausfiihrungsform zu entnehmen, wobei sowohl die Magnetspule 20, die in Stromflussrichtung 64 durchflossen wird, als auch die mit dieser zusammenwirkenden Ankerflügel 21 des ersten Einschaltmoduls 42 bzw. des zweiten Einschaltmoduls 44 jeweils zur Hälfte dargestellt sind. Aus der Darstellung gemäß der Figur 7.3 geht hervor, dass die Magnetkerne 18 der Halbspulen jeweils in eine Richtung von Strom durchflossen werden, im Unterschied zu den in den Figuren 1.1 bis 6 dargestellten Ausführungsvarianten des erfindungsgemäß vorgeschlagenen Drehaktors.

Der Darstellung gemäß Figur 8 ist eine weitere Ausführungsform des erfindungsgemäß vorgeschlagenen Drehaktormoduls zu entnehmen.

Wie der Darstellung gemäß Figur 8 zu entnehmen ist, sind bei dieser Anordnung von zwei in 180°-Versatz zueinander angeordneten Einschaltmodulen 42, 44 die Ankerflügel 21 vollständig durch Permanentmagnete 68 ersetzt. Die vollständig als Permanentmagnete ausgeführten Ankerflügel sind über die Hebelarme 24 von identischer Länge im 180°-Versatz 46 mit der Drehachse 14, die sich zur Zeichenebene gemäß der Figur 8 erstreckt, gekoppelt. Das erste Einschaltmodul 42 bzw. das zweite Einschaltmodul 44 umfassen jeweils Magnetkerne 18, in welche die in Zusammenhang mit der vorstehenden Ausführungsvariante gemäß der Figuren 7.1, 7.2. und 7.3 dargestellten Halbspulen eingelassen sind, so dass sich eine einheitliche Stromflussrichtung 64 einstellt. Analog zu den vorstehenden Ausführungsvarianten des erfindungsgemäß vorgeschlagenen Drehaktor-Moduls, umfassen die Einschaltmodule 42 bzw. 44 die Ankerflügel 21, die gemäß der Ausführungsform in Figur 8 durch die Komplettpermanentmagnete 68 gebildet werden, die Magnetkerne 18 sowie die darin aufgenommenen Halbspulen 20. Anstelle der in Figur 8 dargestellten zwei Einschaltmodule 42, 44 können auch mehrere - je nach zur Verfügung stehendem Bauraum innerhalb des Gehäuses 12 - Einschaltmodule vorgesehen werden. Die Rückstellung der Ankerflügel 21 in die erste Drehrichtung 28 können gemäß dieser Ausführungsvariante durch Umkehrung der Stromrichtung in den Magnetspulen 20, durch zusätzlich vorzusehende Rückstellmodule oder durch andere Rückstellelemente wie zum Beispiel Rückstellfedern 26 bewerkstelligt werden.

Der Darstellung gemäß Figur 9 ist eine Ausführungsform des erfindungsgemäß vorgeschlagenen Drehaktors mit partiell als Permanentmagnete ausgeführten Ankerflügeln 68 als Komponenten der Einschaltmodule zu entnehmen.

Die Draufsicht gemäß Figur 9 zeigt, dass im Innenraum des Gehäuses 12 des Drehaktors 10 partiell als Permanentmagnete ausgeführte Ankerflügel 66 über die Hebelarme 24 identischer Länge mit der Drehachse 14 gekoppelt sind. Analog zu den vorstehend beschriebenen Ausfiihrungsformen erstreckt sich die Drehachse 14 zentrisch im Gehäuse 12 in die Zeichenebene der Darstellung gemäß Figur 9. Aus der in Figur 9 dargestellten Draufsicht dieser Ausfiihrungsvariante des Drehaktors 10 geht hervor, dass die Ankerflügel 21 gemäß dieser Ausführungsform durch partiell als Permanentmagnete 66 ausgeführt sind. Diese sind innerhalb der Einschaltmodule 42, 44 jeweils Magnetkerne 18 zugeordnet, die von Magnetspulen 20 durchzogen sind, die denjenigen gemäß der Ausführungsformen in den Figuren 1.1 bis 6 entsprechen.

Den Darstellungen gemäß der Figuren 10 und 11 ist eine Ausfiihrungsform des erfindungsgemäß vorgeschlagenen Drehaktor-Moduls zu entnehmen, bei dem einem Einschaltmodul jeweils ein Rückstellmodul zugeordnet ist.

Die in den Figuren 10 und 1 dargestellten Ausführungsformen der erfindungsgemäß vorgeschlagenen Lösung stellen eine Konstruktionsvariante mit erweiterten Modulen dar, wobei einem jeden der Einschaltmodule 42, 44 jeweils ein separates Rückstellmodul 70 in Form einer gesonderten bestrombaren Spule, die in einen Magnetkern eingebettet ist, zugeordnet ist. Diese Ausführungsform von erweiterten Modulen, d.h. mit Rückstellmodulen 70 kann an die Stelle der vorstehend den einzelnen Ankerflügeln 21 jeweils zugeordneten, mit der Innenseite des Gehäuses 12 verbundenen Rückstellfedern 26 treten.

Beim Einschaltvorgang werden die Einschaltmodule 42, 44 bestromt, während beim Ausschaltvorgang die Module 70 bzw. deren Spulen 20 bestromt werden. Damit kann die Rückstellfeder 26 entfallen. Da beim Einschaltvorgang in diesem Falle keine Federkraft überwunden werden muss, erhöht sich entsprechend des entwickelten Drehmomentes die Dynamik. Die Bestromungszeiten der jeweiligen Spulen 20 können in der Weise optimiert und aufeinander abgestimmt werden, dass die Bewegungsdauer des Drehaktor-Moduls gemäß dieser Ausführungsform beim Ein- und Ausschalten möglichst kurz ist. Gemäß der in Figur 10 dargestellten Ausführungsform sind die einzelnen Ankerflügel 21 über Hebelarme 24 identischer Länge mit der Drehachse 14 verbunden, über die ein in Figur 10 nicht dargestellter Öffnungs-/Schließmechanismus 50 betätigbar ist.

Figur 1 zeigt die in Figur 10 dargestellte Ausführungsform in dreidimensionaler Darstellung. Der Drehaktor 10 ist im Gehäuse 12 untergebracht, wobei beidseits die Ankerflügel 21, die symmetrisch zueinander verlaufend ausgebildet sind, jeweils Magnetkerne 18 mit bestrombaren Spulen 20 aufnehmen. Diese werden wie vorstehend dargelegt, beim Ein- bzw. Ausschalten abwechselnd bestromt. Der Vorteil dieser Ausführungsvariante, d.h. der Ausführungsvariante gemäß der Figuren 10 und 11 ist darin zu erblicken, dass beim Einschaltvorgang die Kraft einer Rückstellfeder 26 gemäß der vorstehend erläuterten Ausführungsform in Zusammenhang mit den Figuren 1.1. bis 7.1 nicht zu überbrücken ist, was die Schaltdynamik der Lösung gemäß der Figuren 10 und 1 sehr vorteilhaft beeinflusst.

Den Darstellungen gemäß der Figuren 12 und 13 ist eine Ausfiihrungsform des erfindungsgemäß vorgeschlagenen Drehaktor-Moduls zu entnehmen, bei dem zwei Einschaltmodule in Bezug auf eine Kippachse um einen Kippwinkel verkippt angeordnet sind.

Aus der Draufsicht gemäß Figur 12 geht hervor, dass eine Kippachse 42 senkrecht zur Drehachse 14, die sich in die Zeichenebene gemäß der Darstellung in Figur 12 erstreckt, verläuft. An der Kippachse 72 sind eine erstes Einschaltmodul 42 und ein zweites Einschaltmodul 44 um einen Kippwinkel 74 (vgl. Darstellung gemäß Figur 13) von wenigen Winkelgraden verkippt aufgenommen. Die Einschaltmodule 42, 44, die in Bezug auf die Drehachse 14 zueinander mit einem 180°-Versatz 46 aufgenommen sind, umfassen jeweils einen Ankerflügel 2 und einem Magnetkern 18 mit einer bestrombaren Magnetspule 20. Die bestrombare Magnetspule 20 entspricht derjenigen, die in Zusammenhang mit den Ausführungsformen gemäß der Figuren 10 und 11, 1.1 bis 6 und 9 bis 11 dargestellt ist.

Die Ankerflügel 21, die einander mit einem 180°-Versatz 46 gegenüberliegen, sind über Hebelarme 24 mit der sich in die Zeichenebene erstreckenden Drehachse 14 verbunden.

Wie aus der Darstellung gemäß Figur 13 hervorgeht, umfasst die erzeugte Magnetkraft, die sich im Wesentlichen in der Zeichenebene gemäß der Figur 12, vgl. Darstellung gemäß Figur 2.1 erstreckt, durch die Ausführungsvariante gemäß der Figuren 12 und 13, eine zusätzliche Axialkraftkomponente 76, wie in Figur 13 dargestellt. Die Axialkraftkomponente 76 verläuft entlang der Z-Achse des Gehäuses 12, d.h. in vertikale Richtung. Durch die Magnetkraft der Einschaltmodule 42, 44 gemäß der Darstellung in Figur 12, bei um einen Kippwinkel 74 an der Kippachse 72 verkippter Anordnung, wird in der gezeigten Konfiguration ein Bauteil 50, bei dem es sich um einen Offnungs-/Schließmechanismus eines Kraftstoffinjektors handelt, betätigt. Dabei erfolgt ein Anheben des Bauteils 50. Die Magnetkraft der Rückstellmodule, vgl. Ausführungsform gemäß der Figuren 10 und 11 bzw. eine alternativ vorsehbare Rückstellfeder 26, drückt den Öffnungs-/Schließmechanismus 50 bei der Rückstellung in die erste Drehrichtung 28 im Uhrzeigersinn wieder nach unten.

Über die Vorgabe des Kippwinkels 74 der einzelnen Magnetkreise des erstem Einschaltmoduls 42 bzw. des zweiten Einschaltmoduls 44, kann eine beliebige Aufteilung zwischen der tangentialen, d.h. in Längsrichtung wirkenden Magnetkraft *F̅* 34 und der zusätzlichen Axialkraftkomponente 76 parallel zur Z-Achse des Gehäuses erreicht werden. Zur kontrollierten Kopplung zwischen den dreh- bzw. erzielbaren Freiheitsgraden des Dreh-Aktors können auch gewindeartige Strukturen an der Drehachse 14 vorgesehen sein. Eine in Abwandlung der Darstellung gemäß Figur 13 in einem entgegengesetzten Kippwinkel 74 aufgenommene Ausführungsvariante der Einschaltmodule 42, 44 führte zur Bewegungskombination, dass bei einer Betätigung in die zweite Drehrichtung 30 ein Absenken eines Betätigungsorganes des Öffnungs- bzw. Schließmechanismus 50 aufträte und bei einer Bewegung in die erste Drehrichtung 28, d.h. gemäß des Uhrzeigersinns ein Anheben desselben erfolgte.

## Patentansprüche

1. Drehaktor (10), insbesondere zur Betätigung eines Kraftstoffinjektors für Verbrennungskraftmaschinen, mit einem Gehäuse (12), in dem mindestens ein Drehaktor-Modul (16, 22, 42, 44) angeordnet ist, welcher einen Magnetkern (18) mit mindestens einer Magnetspule (22, 64) oder Magnethalbspule (22) umfasst, wobei der Magnetkern (18) fest mit dem Gehäuse (12) verbunden ist, **dadurch gekennzeichnet, dass** mindestens ein Ankerflügel (21) mit einem Hebelarm (24) um eine Drehachse (14) schwenkbar gelagert ist, derart, dass durch die Bestromung der mindestens einen Magnetspule (20, 64) oder Magenthalbspule (20) Magnetkräfte *F̅* (34) erzeugt werden, die die Lage des mindestens einen Ankerflügels (21) in azimutaler Richtung verändern.

2. Drehaktor (10) gemäß Anspruch 1, **dadurch gekennzeichnet, dass** das mindestens eine Drehaktor-Modul (16, 22, 42, 44) zumindest zwischen einer ersten azimutalen Winkelposition hin- und herschalbar ist und über mindestens ein Rückstellelement (26, 70) beaufschlagt ist.

3. Drehaktor (10) gemäß Anspruch 1, **dadurch gekennzeichnet, dass** das mindestens eine Rückstellelement als am Gehäuse (12) und am Ankerflügel (21, 66, 68) oder am mit dem mindestens einen Ankerflügel (21) verbundenen Hebelarm (24) oder an einer Drehachse (14) befestigte Rückstellfeder (26) oder als Rückstellmodul (70) mit einer in einem Magnetkern (18) eingebetteten bestrombaren Magnetspule (20, 38) ausgeführt ist.

4. Drehaktor (10) gemäß Anspruch 1, **dadurch gekennzeichnet, dass** das mindestens eine Drehaktor-Modul (16, 22, 42, 44) mindestens einen Öffnungs-/Schließmechanismus (50) über mindestens eine mechanische Übersetzung (24, 52, 54, 56, 58, 60, 62) betätigt.

5. Drehaktor (10) gemäß Anspruch 3, **dadurch gekennzeichnet, dass** die mechanische Übersetzung als Hebelarm (24) zwischen dem mindestens einen Drehaktor-Modul (22) und einer Drehachse (14), oder als Hebelarme (52, 54) unterschiedliche Länge, die über eine mittige oder exzentrische Achse (48) miteinander gekoppelt sind, oder als Übersetzungsarme (56, 58) zur Erhöhung der Torsionskraft, oder als Drehwegüberstzung (60) zur Steigerung des resultierenden Drehmomentes bzw. zur Erhöhung des Drehweges ausgebildet sind.

6. Drehaktor (10) gemäß der Ansprüche 1 bis 4, **dadurch gekennzeichnet, dass** in einem Gehäuse (12) mindestens zwei eine Drehachse (14) zwischen zwei azimutalen Winkelpositionen hin- und herschaltende Drehaktor-Module (42, 44) in relativem Winkel- und/oder Höhenversatz in Bezug aufeinander angeordnet sind.

7. Drehaktor (10) gemäß der Ansprüche 1 bis 5, **dadurch gekennzeichnet, dass** die Ankerflügel (21) der Drehaktor-Module (22, 42, 44) partiell oder komplett als Permanentmagnete (66, 68) ausgeführt sind.

8. Drehaktor (10) gemäß der Ansprüche 1 bis 6, **dadurch gekennzeichnet, dass** mindestens ein Drehaktor-Modul (22, 42, 44) in Bezug auf die Drehachse (14) um mindestens einen Kippwinkel (74) um mindestens eine Kippachse (72) verkippt ist und eine von den Kippwinkeln (74) abhängig, zusätzliche, in axiale Richtung parallel zur Drehachse (14) verlaufende Axialkraftkomponente erzeugen.

9. Drehaktor (10) gemäß Anspruch 7, **dadurch gekennzeichnet, dass** ein Öffnungs-/Schließmechanismus (50) durch eine Magnetkraft in einer ersten Drehrichtung (28, 30) betätigt und gleichzeitig angehoben bzw. abgesenkt und durch ein Rückstellmodul (70) oder eine Rückstellfeder (26) oder durch Umkehrung der Bestromungsrichtung in den Magnetspulen (20, 38) in einer zweiten Drehrichtung (28, 30), die der ersten Drehrichtung (28, 30) entgegengesetzt ist, betätigt und gleichzeitig abgesenkt bzw. abgehoben wird.

10. Drehaktor (10) gemäß der Ansprüche 1 bis 8, **dadurch gekennzeichnet, dass** durch eine geeignete Vorrichtung vorzugsweise eine Feder eine zusätzliche Kraftkomponente in axiale Richtung auf einen Öffnungs-/Schließmechanismus (50) oder die Drehachse (14) oder die Hebelarme (24, 52, 54, 56, 58, 60, 62) oder die Ankerflügel (21) wirkt.

11. Drehaktor (10) gemäß der Ansprüche 7 bis 9, **dadurch gekennzeichnet, dass** durch eine mechanische Vorrichtung vorzugsweise durch eine gewindeähnliche Struktur auf der Drehachse (14) eine definierte Kopplung zwischen den Dreh- und den Hubfreiheitsgraden der Ankerflügel (21) gegeben ist.

## Claims

1. Rotary actuator (10), particularly for actuating a fuel injector for internal combustion engines, with a housing (12) in which is arranged at least one rotary-actuator module (16, 22, 42, 44) which comprises a magnetic core (18) with at least one magnetic coil (22, 64) or magnetic half-coil (22), the magnetic core (18) being connected firmly to the housing (12), **characterized in that** at least one armature wing (21) is pivotably mounted about an axis of rotation (14) by means of a lever arm (24), in such a way that, by current being applied to the at least one magnetic coil (20, 64) or magnetic half-coil (20), magnetic forces *F̅* (34) are generated which vary the position of the at least one armature wing (21) in the azimuthal direction.

2. Rotary actuator (10) according to Claim 1, **characterized in that** the at least one rotary-actuator module (16, 22, 42, 44) can be switched back and forth at least between a first azimuthal angular position and is acted upon via at least one restoring element (26, 70).

3. Rotary actuator (10) according to Claim 1, **characterized in that** the at least one restoring element is designed as a restoring spring (26), fastened to the housing (12) and to the armature wing (21, 66, 68) or to the lever arm (24) connected to the at least one armature wing (21) or at an axis of rotation (14), or as a restoring module (70) with a magnetic coil (20, 38) embedded in a magnetic core (18) and capable of having current applied to it.

4. Rotary actuator (10) according to Claim 1, **characterized in that** the at least one rotary-actuator module (16, 22, 42, 44) actuates at least one opening/closing mechanism (50) via at least one mechanical step-up (24, 52, 54, 56, 58, 60, 62).

5. Rotary actuator (10) according to Claim 3, **characterized in that** the mechanical step-up is designed as a lever arm (24) between the at least one rotary-actuator module (22) and an axis of rotation (14) or as lever arms (52, 54) of different length, which are coupled to one another via a central or eccentric axis (48), or as step-up arms (56, 58) for increasing the torsional force or as rotary-travel step-up (60) for increasing the resulting torque or for increasing the rotary travel.

6. Rotary actuator (10) according to Claims 1 to 4, **characterized in that** at least two rotary-actuator modules (42, 44) switching back and forth between two azimuthal angular positions are arranged in a housing (12) at a relative angular and/or height offset with respect to one another.

7. Rotary actuator (10) according to Claims 1 to 5, **characterized in that** the armature wings (21) of the rotary-actuator modules (22, 42, 44) are designed partially or completely as permanent magnets (66, 68).

8. Rotary actuator (10) according to Claims 1 to 6, **characterized in that** at least one rotary-actuator module (22, 42, 44) is tilted with respect to the axis of rotation (14) by the amount of at least one tilt angle (74) about at least one tilt axis (72) and generates an additional axial-force component which is dependent upon the tilt angles (74) and which runs parallel to the axis of rotation (14) in the axial direction.

9. Rotary actuator (10) according to Claim 7, **characterized in that** an opening/closing mechanism (50) is actuated and simultaneously raised or lowered in a first direction of rotation (28, 30) by a magnetic force and is actuated and simultaneously lowered or raised in a second direction of rotation (28, 30), which is opposite to the first direction of rotation (28, 30), by a restoring module (70) or a restoring spring (26) or by the reversal of the direction of application of current in the magnetic coils (20, 38).

10. Rotary actuator (10) according to Claims 1 to 8, **characterized in that** an additional force component acts in the axial direction upon an opening/closing mechanism (50) or the axis of rotation (14) or the lever arms (24, 52, 54, 56, 58, 60, 62) or the armature wings (21) by means of a suitable device, preferably a spring.

11. Rotary actuator (10) according to Claims 7 to 9, **characterized in that** defined coupling between the degrees of freedom of rotation and of lift of the armature wings (21) is afforded by a mechanical device, preferably by a thread-like structure on the axis of rotation (14).

## Revendications

1. Actionneur rotatif (10), en particulier pour l'actionnement d'un injecteur de carburant pour des moteurs à combustion interne, comprenant un boîtier (12) dans lequel est disposé au moins un module d'actionneur rotatif (16, 22, 42, 44) qui comporte un noyau magnétique (18) avec au moins une bobine magnétique (22, 64) ou une demi-bobine magnétique (22), le noyau magnétique (18) étant relié fixement au boîtier (12), **caractérisé en ce qu'**au moins une ailette d'armature (21) est montée pivotante autour d'un axe de rotation (14) à l'aide d'un bras de levier (24) de telle sorte que des forces magnétiques F̅ (34) soient générées par l'alimentation en courant électrique de l'au moins une bobine magnétique (20, 64) ou demi-bobine magnétique (20), lesquelles forces magnétiques modifient la position de l'au moins une ailette d'armature (21) dans la direction azimutale.

2. Actionneur rotatif (10) selon la revendication 1, **caractérisé en ce que** l'au moins un module d'actionneur rotatif (16, 22, 42, 44) peut être commuté de manière alternative au moins entre une première position angulaire azimutale et peut être sollicité au moyen d'au moins un élément de rappel (26, 70).

3. Actionneur rotatif (10) selon la revendication 1, **caractérisé en ce que** l'au moins un élément de rappel est réalisé sous forme de ressort de rappel (26) fixé au boîtier (12) et à l'ailette d'armature (21, 66, 68) ou fixé au bras de levier (24) relié à l'au moins une ailette d'armature (21) ou fixé à un axe de rotation (14), ou sous forme de module de rappel (70) comprenant une bobine magnétique (20, 38) encastrée dans un noyau magnétique (18) et pouvant être alimentée en courant électrique.

4. Actionneur rotatif (10) selon la revendication 1, **caractérisé en ce que** l'au moins un module d'actionneur rotatif (16, 22, 42, 44) actionne au moins un mécanisme d'ouverture/fermeture (50) au moyen d'au moins une transmission mécanique (24, 52, 54, 56, 58, 60, 62).

5. Actionneur rotatif (10) selon la revendication 3, **caractérisé en ce que** la transmission mécanique est réalisée sous forme de bras de levier (24) entre l'au moins un module d'actionneur rotatif (22) et un axe de rotation (14) ou sous forme de bras de levier (52, 54) de différentes longueurs qui sont reliés les uns aux autres par l'intermédiaire d'un axe (48) central ou excentrique ou sous forme de bras de transmission (56, 58) pour augmenter la force de torsion ou sous forme de transmission de course de rotation (60) pour accroître le couple résultant ou pour augmenter la course de rotation.

6. Actionneur rotatif (10) selon les revendications 1 à 4, **caractérisé en ce qu'**au moins deux modules d'actionneur rotatif (42, 44) commutant de manière alternative un axe de rotation (14) entre deux positions angulaires azimutales sont disposés dans un boîtier (12) avec un décalage angulaire et/ou en hauteur les uns par rapport aux autres.

7. Actionneur rotatif (10) selon les revendications 1 à 5, **caractérisé en ce que** les ailettes d'armature (21) des modules d'actionneur rotatif (22, 42, 44) sont réalisées partiellement ou entièrement sous forme d'aimants permanents (66, 68).

8. Actionneur rotatif (10) selon les revendications 1 à 6, **caractérisé en ce qu'**au moins un module d'actionneur rotatif (22, 42, 44) est basculé par rapport à l'axe de rotation (14) d'au moins un angle de basculement (74) autour d'au moins un axe de basculement (72) et génère une composante de force axiale supplémentaire s'étendant parallèlement à l'axe de rotation (14) dans la direction axiale et dépendant des angles de basculement (74).

9. Actionneur rotatif (10) selon la revendication 7, **caractérisé en ce qu'**un mécanisme d'ouverture/fermeture (50) est actionné et simultanément soulevé ou abaissé par une force magnétique dans un premier sens de rotation (28, 30) et est actionné et simultanément abaissé ou soulevé par un module de rappel (70) ou un ressort de rappel (26) ou par inversion du sens de l'alimentation en courant électrique dans les bobines magnétiques (20, 38) dans un deuxième sens de rotation (28, 30) qui est contraire au premier sens de rotation (28, 30).

10. Actionneur rotatif (10) selon l'une quelconque des revendications 1 à 8, **caractérisé en ce qu'**au moyen d'un dispositif approprié, de préférence un ressort, une composante de force supplémentaire agit dans la direction axiale sur un mécanisme d'ouverture/fermeture (50) ou l'axe de rotation (14) ou les bras de levier (24, 52, 54, 56, 58, 60, 62) ou l'ailette d'armature (21).

11. Actionneur rotatif (10) selon les revendications 7 à 9, **caractérisé en ce qu'**au moyen d'un dispositif mécanique, de préférence un structure semblable à un filetage sur l'axe de rotation (14), un accouplement défini entre les degrés de liberté de rotation et de levage de l'ailette d'armature (21) est produit.
